# EUROPÄISCHE PATENTSCHRIFT

(11) **EP 1 990 129 B1**
(45) Veröffentlichungstag und Bekanntmachung des Hinweises auf die Patenterteilung: **27.10.2010**
(21) Anmeldenummer: 07009221.8
(22) Anmeldetag: 08.05.2007
(51) Int. Cl.: B23Q 7/10, B23Q 16/00, B65G 47/00

(54) **Beschickungseinrichtung und Verfahren zum Beschicken einer Bearbeitungseinrichtung einer Werkzeugmaschine**
Loading device and method for loading the machining device of a machine tool
Dispositif d'alimentation et procédé destiné à alimenter un dispositif de traitement d'une machine-outil

(43) Veröffentlichungstag der Anmeldung: 12.11.2008
(73) Patentinhaber: TRUMPF Werkzeugmaschinen GmbH + Co. KG, 71254 Ditzingen (DE)
(72) Erfinder: Stolzer, Armin, 55283 Nierstein (DE)
(74) Vertreter: Kohler Schmid Möbus

(56) Entgegenhaltungen:
- EP-A- 0 481 462
- EP-A- 1 065 027
- US-A- 3 618 741
- US-A1- 2006 124 436

## Beschreibung

Die Erfindung betrifft eine Beschickungseinrichtung zum Beschicken einer Bearbeitungseinrichtung einer Werkzeugmaschine mit zu bearbeitenden stangen- oder stabartigen Werkstücken, beispielsweise mit Rohren, umfassend eine Positioniereinrichtung sowie eine Transporteinrichtung wobei die Positioniereinrichtung eine gegen die Horizontale geneigte Werkstückauflage sowie einen Positionieranschlag aufweist, mittels dessen ein zu bearbeitendes, auf der Werkstückauflage aufliegendes Werkstück in einer Überhahmeposition gegen die Wirkung der Schwerkraft in Werkstückquerrichtung abstützbar ist, und wobei das in der Übernahmeposition angeordnete Werkstück von der Transporteinrichtung aufnehmbar und aus der Übernahmeposition in Richtung auf die Bearbeitungseinrichtung transportierbar ist, wobei der Positionieranschlag der Positioniereinrichtung entlang der geneigten Werkstückauflage bewegbar und in unterschiedliche Anschlag-Positionen zustellbar ist. Die Erfindung betrifft weiterhin ein Verfahren zum Beschicken einer Bearbeitungseinrichtung einer Werkzeugmaschine mit zu bearbeitenden Werkstücken der vorstehenden Art.

Für die Beschickung der Bearbeitungseinrichtung eine Werkzeugmaschine mit einem Werkstück ist wesentlich, dass das Werkstück in einer zu der Bearbeitungseinrichtung hin gelegenen Übergabeposition mit einer definierten Position übergeben wird. Eine solche definierte Position ist erreicht, wenn ein Querschnittszentrum des Werkstücks, d.h. ein für die Bewegungssteuerung geeigneter Referenzpunkt des Werkstückquerschnitts in der Übergabeposition mit einem dort definierten Übergabezentrum zusammenfällt. Hierbei ist zu gewährleisten, dass auch beim Beschicken der Bearbeitungseinheit mit Werkstücken unterschiedlicher Querschnittsmaße dieses Übergabezentrum präzise angefahren werden kann.

Stand der Technik hierzu ist aus der EP 0 481 462 B1 bekannt. Dort wird ein durch den Positionieranschlag in der Übernahmeposition abgestütztes Rohr mit Hilfe von Beladearmen aufgenommen und von der Werkstückauflage abgehoben. Der Transport des Rohrs aus der Übernahmeposition in eine Übergabeposition, in der das Rohr auf Lagerarmen der Bearbeitungseinrichtung aufliegt, erfolgt durch Bewegen der Beladearme mittels eines Getriebes, welches derart ausgebildet ist, dass sich das in Ausnehmungen der Beladearme aufgenommene Rohr entlang einer Kreisbahn bewegt.

Bei der aus der EP 0 481 462 B1 bekannten Beschickungseinrichtung ist der Positionieranschlag ein Festanschlag, an welchem die Werkstücke, welche der Bearbeitungseinrichtung zugeführt werden müssen, in der Übernahmeposition abgestützt sind. Bei der Beschickung der Bearbeitungseinrichtung mit Werkstücken unterschiedlicher Querschnittsmaße variiert die Lage der Querschnittszentren der in der Übernahmeposition angeordneten Werkstücke in Bezug auf die Abstützung des Werkstückes am Festanschlag. Demzufolge hängt der Radius des Kreisbogens, auf dem sich das Querschnittszentrum des zu übergebenden Werkstücks bewegt, von dem Werkstückquerschnitt ab. Gleichwohl muss jedes Werkstück in eine Übergabeposition bewegt werden, in welcher das Querschnittszentrum des Werkstücks mit dem Übergabezentrum zusammenfällt.

Eine gattungsfremde Beschickungseinrichtung für eine Werkzeugmaschine ist aus der EP 1 002 623 B1 bekannt. Dort ist ein zu bearbeitendes Werkstück in der Übernahmeposition auf einer horizontalen Werkstückauflage abgelegt und in horizontaler Richtung an einem Positionieranschlag in Werkstückquerrichtung abgestützt. Eine in horizontaler Richtung linear verschiebbare Einspanneinrichtung nimmt das zu bearbeitende Werkstück in der Übernahmeposition auf, indem es dieses in vertikaler Richtung einspannt. Nachfolgend wird das Werkstück mittels der Einspanneinrichtung in horizontaler Richtung zu einer Übergabeposition an einer Bearbeitungseinrichtung einer Werkzeugmaschine transportiert.

Gattungsgemäßer Stand der Technik ist aus der US-A-3 618 741 bekannt. Das Abstützen des Werkstücks während der Bewegung entlang der Werkstückauflage verhindert dort ein Aufschlagen des Werkstücks auf dem Positionieranschlag, wie es im Fall des weiter oben beschriebenen Absenkens unter Schwerkraftwirkung erfolgt. Mit dem Aufschlagen des Werkstücks verbundene Beschädigungen und Lärmbelästigungen werden durch den entlang der geneigten Werkstückauflage bewegbaren Positionieranschlag vermieden.

### Aufgabe der Erfindung

Es ist die Aufgabe der vorliegenden Erfindung, eine Beschickungseinrichtung sowie ein Beschickungsverfahren der gattungsgemäßen Art dahingehend weiterzubilden, dass die Positionierung des Werkstücks mit hoher Prozesssicherheit erfolgen kann.

### Gegenstand der Erfindung

Erfindungsgemäß wird diese Aufgabe vorrichtungsbezogen durch die Merkmale des kennzeichnenden Teils des Anspruchs 1 gelöst.

Die in Anspruch 1 beschriebene Zustellbarkeit des Positionieranschlags in eine zufuhrseitige Anschlag-Position, die üblicherweise nahe einer oberen Kante der Werkstückauflage liegt, erlaubt ein kontrolliertes Absenken des Werkstücks in die abfuhrseitige Anschlag-Position. Das Werkstück wird gemeinschaftlich mit dem Positionieranschlag und auf diesem abgestützt abgesenkt und an der zufuhrseitigen Anschlag-Position zugestellt. Das Werkstück kann dann an der Transporteinrichtung in Einspannrichtung der anspruchsgemäßen Einspanneinrichtung zentriert aufgenommen werden, sodass das Querschnittszentrum des Werkstücks in einer zweiten Koordinate mit dem Transport-Startzentrum übereinstimmt. Bei einer zusätzlichen, weiter unten beschriebenen Positionierung des Querschnittszentrums des Werkstücks an der Positioniereinrichtung kann das Querschnittszentrum des Werkstücks mit dem Tränsport-Starlzentrum der Transporteinrichtung zusammenfallen. Hierbei können durch den beweglichen Poskionieranschlag zu bearbeitende Werkstücke unabhängig von deren Querschnittsmaßen derart positioniert werden, dass sich das Querschnittszentrum der in der Übernahmeposition befindlichen Werkstücke stets in ein und derselben Position befindet. Auch dadurch wird die Prozesssicherheit beim Beschicken der Bearbeitungseinrichtung erhöht.

Eine bevorzugte Ausführungsform der erfindungsgemäßen Beschickungseinrichtung ist in Anspruch 2 beschrieben. In diesem Fall wird das Querschnittszentrum des in der Übernahmeposition angeordneten Werkstücks in der ersten Koordinate, die eine an der geneigten Werkstückauflage definierte Koordinate ist, lagedefiniert.

Die Zustellung des Positionieranschlags in die jeweils korrekte Anschlag-Position kann numerisch gesteuert erfolgen. Zu diesem Zweck lassen sich die Querschnittsmaße des jeweiligen Werkstücks mittels eines Eingabegeräts, z.B. eines PCs, bereitstellen. Alternativ oder zusätzlich ist es auch möglich, an der Positioniereinrichtung Mittel vorzusehen, welche die Bestimmung des Querschnittsmaßes in Richtung der geneigten Werkstückauflage erlauben. Hierzu kann z.B. an der geneigten Werkstückauflage ein ortsfester optischer Sensor vorgesehen sein. Die Zeit für das Überfahren durch das auf dem Positionieranschlag abgestützte Werkstück wird gemessen, sodass bei bekannter Geschwindigkeit der Bewegung des Positionieranschlags das Querschnittsmaß des Werkstücks in Bewegungsrichtung und damit in Richtung der geneigten Werkstückauflage bestimmbar ist.

Bei einer weiteren bevorzugten Ausführungsform, wie sie in Anspruch 3 beschrieben ist, kann das Werkstück in Werkstücklängsrichtung positioniert werden, wodurch das Werkstück auch mit einer in dieser Richtung definierten Übergabeposition in Richtung auf die Bearbeitungseinheit übergeben werden kann. Im Falle einer bevorzugten Weiterbildung dieser Ausführungsform nach Anspruch 4 kann das Werkstück zur Längspositionierung mittels der Vorschubeinrichtung am Referenzanschlag angelegt werden, wobei sich bei anliegendem Werkstück mittels einer geeigneten Messeinrichtung die Länge des Werkstücks in Werkstücktängsrichtung durch Ermittlung des Abstandes zwischen Vorschubeinrichtung und Referenzanschlag bestimmen lässt.

Bei einer vorteilhaften Weiterbildung gemäß Anspruch 5 kann durch einen Tiefenanschlag eine zusätzliche Abstützung des Werkstücks erfolgen. Der Tiefenanschlag ist hierbei bewegbar, damit er sich auf unterschiedlichen Anschlag-Positionen des Positionieranschlags abstimmen lässt. In einer vorteilhaften Weiterbildung nach Anspruch 6 ist an dem Positionieranschlag eine Anschlagfläche zur Einstellung des Tiefenanschlags am Positionieranschlag vorgesehen. Der Tiefenanschlag wird bis in die Anschlag-Position des Positionieranschlags bewegt Insbesondere wird verhindert, dass der Tiefenanschlag bei seiner Einstellung das Werkstück vom Positionieranschlag gegen die Wirkung der Schwerkraft abhebt.

Im Falle der bevorzugten Ausführungsform nach Anspruch 7 ist die Einspanneinrichtung an einem schwenkbaren Arm angebracht. Durch den Transport des Werkstücks auf einer Kreisbahn wird vermieden, dass Baueinheiten der Transporteinrichtung und der Positioniereinrichtung sich gegenseitig behindern. Derartige Behinderungen können etwa bei einer geradlinigen Transportbewegung auftreten. In bevorzugter Weiterbildung dieser Ausführungsform (Anspruch 8) kann die Einspanneinrichtung entlang des schwenkbaren Arms geradlinig verschoben werden, wodurch zusätzlich eine Bewegung in radialer wichtung ermöglicht wird. Hierbei werden bevorzugt zwei Fixpositionen in radialer Richtung angefahren, zwischen denen die Einspanneinrichtung beilspielsweise mittels eines hydraulischen Antriebs linear verschoben werden kann.

Bei einer weiteren vorteilhaften Ausführungsform der Erfindung (Anspruch 9) kann das Werkstück in Werkstücklängsrichtung derart eingespannt werden, dass jeweils eine Einspanneinrichtung in der Nähe eines der beiden Werkstückenden positioniert ist. Hierdurch kann insbesondere bei flexiblen Werkstücken, wie flexiblen Rohren, eine Fehlausrichtung an den Rohrenden verhindert werden, was für eine definierte Übergabe zu der Bearbeitungseinrichtung hin von Vorteil ist. Durch weitere ebenfalls in Werkstücklängsrichtung bewegbare Einspanneinrichtungen kann eine Durchbiegung von flexiblen Werkstücken zwischen den Werkstückenden vermieden werden. Bevorzugt ist eine der Einspanneinrichtungen in Werkstücklängsrichtung ortsfest angeordnet und die weitere(n) Einspanneinrichtung(en) sind entlang der Werkstücklängsrichtung bewegbar, wobei typischerweise zwei bis vier Einspanneinrichtungen vorgesehen sind.

Das erfindungsgemäße Verfahren zum Beschicken einer Bearbeitungseinrichtung einer Werkzeugmaschine ist in Anspruch 10 beschrieben. Eine vorteilhafte Variante dieses Verfahrens ergibt sich unter anderem aus Anspruch 11. Die mit den Verfahren nach den Ansprüchen 10 und 11 verbundenen Vorteile wurden bereits oben im Zusammenhang mit der Beschickungseinrichtung geschildert.

Bei einer besonders vorteilhaften Variante des erfindungsgemäßen Verfahrens (Anspruch 12) kann eine Abweichung zwischen dem gemessen Querschnittsmaß und dem vorgegebenen Querschnittsmaß detektiert werden. Hierdurch kann bei Werkstücken mit unterschiedlichen Abmessungen in Werkstückquerrichtung, z.B. bei Werkstücken mit rechteckigem Querschnitt, festgestellt werden, ob die in ein Magazin vor der Beschickungseinrichtung eingelegten Werkstücke korrekt orientiert eingelegt wurden. Insbesondere bei Werkstücken, deren Längen- und Breitenmaß in Werkstückquerrichtung sich nur unerheblich unterscheiden, kommt es häufig vor, dass die Werkstücke nicht korrekt im Magazin positioniert sind und mit dieser fehlerhaften Orientierung der Positioniereinrichtung zugeführt werden.

Bei einer falschen Orientierung der zu bearbeitenden Werkstücke weicht das Querschnittszentrum des an dem Positionieranschlag abgestützten Werkstücks in beiden Koordinaten von dem Transport-Startzentrum ab. Um eine korrekte Positionierung zu gewährleisten wird daher nach dem Erkennen der fehlerhaften Orientierung das Werkstück von der Einspanneinrichtung freigegeben, um den Positionieranschlag in eine Anschlag-Position zuzustellen, in der das Querschnittszentrum des Werkstücks mit der ersten Koordinate des Transport-Startzentrums übereinstimmt. Wie üblich wird nachfolgend mittels der Einspanneinrichtung das in der Übernahmeposition befindliche Werkstück derart eingespannt, dass dessen Querschnittszentrum in der zweiten Koordinate mit dem Transport-Startzentrum übereinstimmt. Zwar kann dadurch die falsche Orientierung des Werkstücks nicht korrigiert werden, für die Bearbeitungseinrichtung der Werkzeugmaschine ist aber wesentlich, dass das Querschnittszentrum im Übernahmezentrum liegt, was nach Durchführung der Neupositionierung gewährleistet ist. Die Fehl-Orientierung des Werkstücks kann von der Beschickungseinrichtung an die Werkzeugmaschine gemeldet werden, welche ihr Steuerprogramm entsprechend umstellen kann, um das falsch orientierte Werkstück dennoch korrekt zu bearbeiten. Alternativ kann das Werkstück von der Übernahmeposition mittels des Positionieranschlags zurück an die zufuhrseitige Anschlag-Position bewegt werden, von wo aus das falsch orientierte Werkstück abtransportiert oder ggf. dessen Orientierung durch einen Bediener korrigiert wird.

Auch ist es möglich, das Werkstück im eingespannten Zustand zu belassen und bei einer Abweichung zwischen gemessenem und vorgegebenem Querschnittsmaß eine Meldung hierüber an einen Bediener auszugeben, z.B: durch Erzeugung eines akustischen oder optischen Signals. In diesem Fall kann der Bediener überprüfen, ob der Beschickungseinrichtung das korrekte Querschnittsmaß vorgegeben wurde und er kann dieses gegebenenfalls korrigieren, wodurch die Beschickungseinrichtung keine Abweichung mehr detektiert und der Beschickungsvorgang fortgesetzt werden kann. War das vorgegebene Querschnittsmaß hingegen korrekt, kann der Bediener dies ebenfalls der Beschickungseinrichtung anzeigen, woraufhin die weiter oben beschriebenen Maßnahmen eingeleitet werden.

Bei einer weiteren Variante des Verfahrens, wie sie in Anspruch 13 beschrieben ist, ist durch den Transport des Werkstücks auf einem Kreisbogen mehr Bauraum für die Anbringung von Baueinheiten der Beschickungseinrichtung vorhanden als dies beim Transport entlang einer linearen Bahn der Fall wäre. Bei einer bevorzugten Weiterbildung dieser Variante nach Anspruch 14 kann durch das Linearverschieben die Einspanneinrichtung besonders schnell aus der Übergabeposition zurückgezogen werden. Die Bearbeitungseinrichtung kann daher umgehend mit der Bearbeitung des Werkstücks beginnen.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht abschließend zu verstehen, sondern haben vielmehr beispielhaften Charakter.

Es zeigen:
- Fign. 1a,b: schematische Darstellungen einer Ausführungsform einer erfindungsgemäßen Beschickungseinrichtung mit zwei Ablaufschritten einer Vereinzelung eines zu bearbeitenden Werkstücks,
- Fign. 2a,b: schematische Darstellungen der Beschickungseinrichtung der Fign. 1a, 1b mit zwei Ablaufschritten einer Positionierung des zu bearbeitenden Werkstücks in einer Übernahmeposition,
- Fign. 3a,b: schematische Darstellungen der Beschickungseinrichtung der Fign. 1a, 1b mit zwei Einspanneinrichtungen sowie einem Referenzanschlag und einer Vorschubeinrichtung,
- Fign. 4a,b: schematische Darstellungen der Beschickungseinrichtung der Fign. 1a, 1b mit zwei Ablaufschritten einer Aufnahme des zu bearbeitenden Werkstücks durch eine Einspanneinrichtung,
- Fign. 5a,b: schematische Darstellungen einer Einspanneinrichtung der Beschickungseinrichtung der Fign. 1a, 1b mit einem Tiefenanschlag in zwei unterschiedlichen Tiefenanschlag-Positionen und einer Anlagefläche für den Tiefenanschlag an einem Positionieranschlag, und
- Fig. 6: eine schematische Darstellung der Beschickungseinrichtung der Fign. 1a, 1b mit dem zu bearbeitenden Werkstück in einer Übergabeposition.

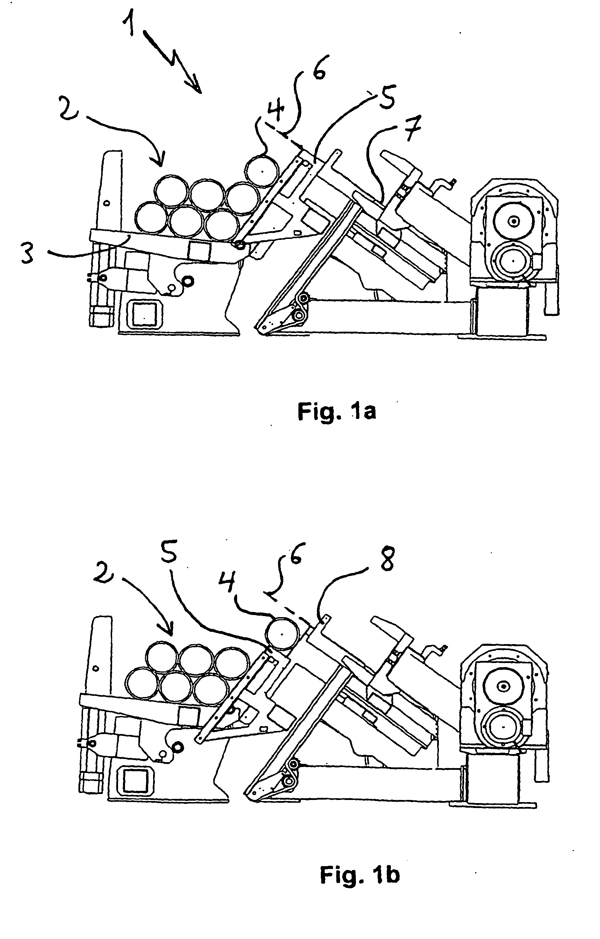

**Fig. 1a** zeigt eine Beschickungseinrichtung **1** zum Beschicken einer (in Fig. 1a nicht gezeigten) Bearbeitungseinrichtung einer Werkzeugmaschine, bei der ein Bündel **2** von zu bearbeitenden Werkstücken in Form von Rund-Rohren in einer Bündelablage **3** der Beschickungseinrichtung 1 abgelegt ist. Alternativ kann das Bündel 2 auch aus zu bearbeitenden Werkstücken mit einem quadratischen oder rechteckigen Querschnitt bestehen. Für das Zuführen von Flachprofilen mit Profilmaßen von z.B. 30 mm x 3 mm kann an Stelle der Bündelmulde 3 als Zufuhreinrichtung für zu bearbeitende Werkstücke ein Förderband vorgesehen sein.

Zur Vereinzelung eines zu bearbeitenden Werkstücks **4** aus dem Bündel 2 wird ein Hebeanschlag **5** aus einer oberen Position **6,** an welcher der Hebeanschlag 5 wie in Fig. 1a gezeigt bündig mit einer gegenüber der Horizontalen geneigten Werkstückauflage **7** angeordnet ist, nach unten bewegt, um das Werkstück 4 aus dem Bündel 2 zu entnehmen. **Fig. 1b** zeigt den Hebeanschlag 5 bei der Aufwärtsbewegung nach der Vereinzelung. Das zu bearbeitende Werkstück 4 wird dabei vom Hebeanschlag 5 abgestützt und in die obere Position 6 angehoben.

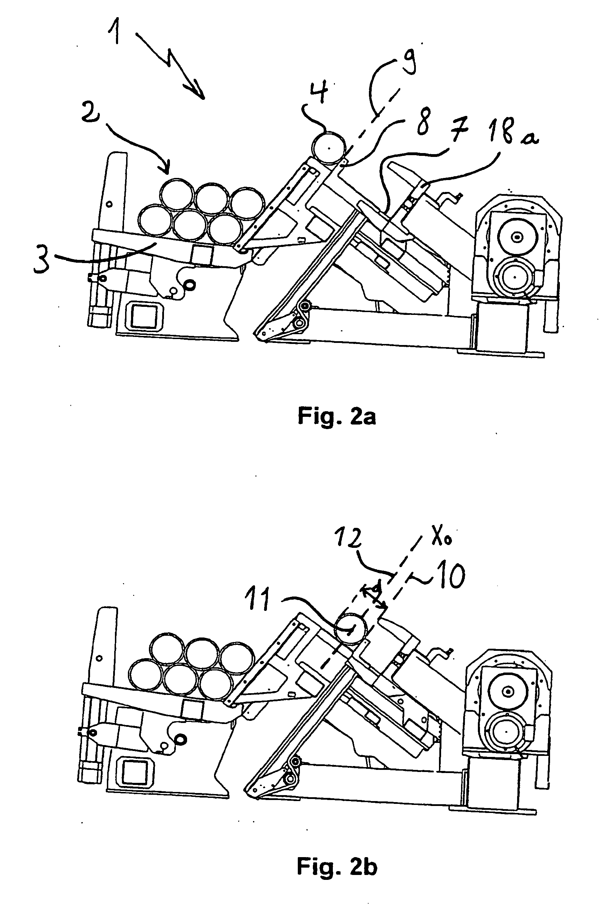

**Fig. 2a** zeigt das vereinzelte Werkstück 4 wie es auf dem zugestellten Hebeanschlag 5 in der oberen Position 6 abgestützt ist. Um zu verhindern, dass das Werkstück 4 entlang der Werkstückauflage 7 nach unten rollt, stützt ein rechenförmiger Positionieranschlag **8** das Werkstück 4 gegen die Wirkung der Schwerkraft in Werkstückquerrichtung ab. Der Positionieranschlag 8 ist dazu in eine zur Zufuhrseite, d.h. zur Bündelmulde 3 hin gelegene Anschlag-Position **9** zugestellt. Der Positionieranschlag 8 wird sodann gemeinschaftlich mit dem Werkstück **4** entlang der geneigten Werkstückauflage 7 bewegt und in eine abfuhrseitige Anschlag-Position **10,** die in Fig. 2b gezeigt ist, zugestellt. Der Positionieranschlag 8 der Beschickungseinrichtung 1 wird hierbei derart angesteuert, dass sich das Werkstück 4 bei Anschlag-Position 10 des Positionieranschlags 8 in einer an der Werkstückauflage 7 in Bewegungsrichtung des Werkstücks 4 vorgegebenen Übernahmeposition **12** befindet.

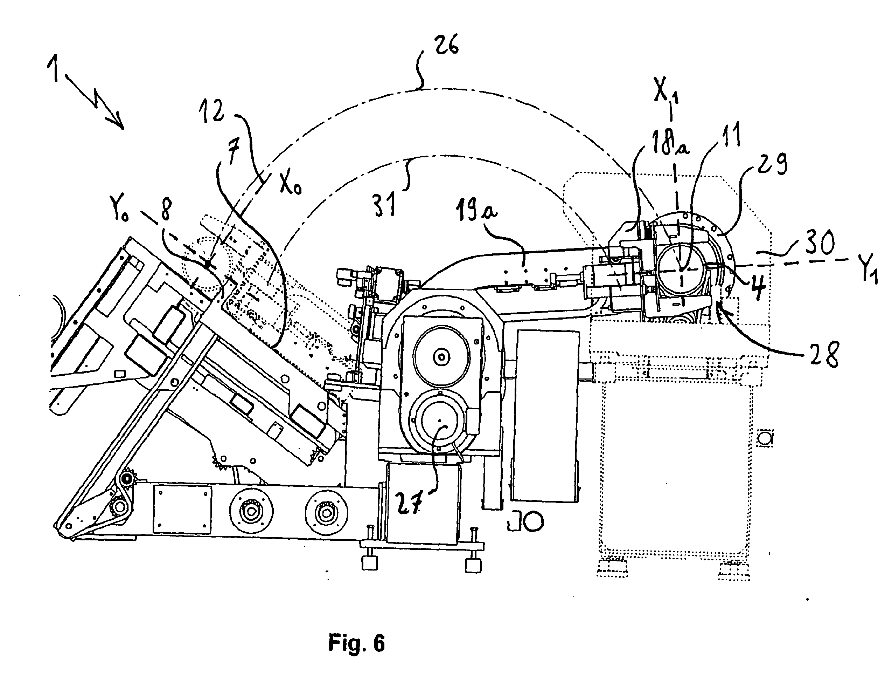

Um bei Werkstücken mit unterschiedlichen Querschnitten zu erreichen, dass die Querschnittszentren **11** der Werkstücke längs der geneigten Werkstückauflage 7 in ein und derselben Position zu liegen kommen, müssen der Beschickungseinrichtung 1 die Querschnittsmaße des jeweils zu bearbeitenden Werkstücks 4 bekannt sein. Bei dem gezeigten Werkstück 4 mit Rundquerschnitt sind die Querschnittsmaße durch einen Durchmesser **d** festgelegt, der im vorliegenden Fall 250 mm beträgt. Der Abstand zwischen der abfuhrseitigen Anschlag-Position 10 des Positionieranschlags 8 und dem Querschnittszentrum 11 des Werkstücks 4 längs der Werkstückauflage 7 muss in diesem Fall d/2, d.h. 125 mm, betragen. Durch den Positionieranschlag 8 und die Werkstückauflage 7 wird somit eine Positioniereinrichtung gebildet, mit deren Hilfe eine erste Koordinate **X₀** eines Transport-Startzentrums definiert ist (**Fig. 6**).

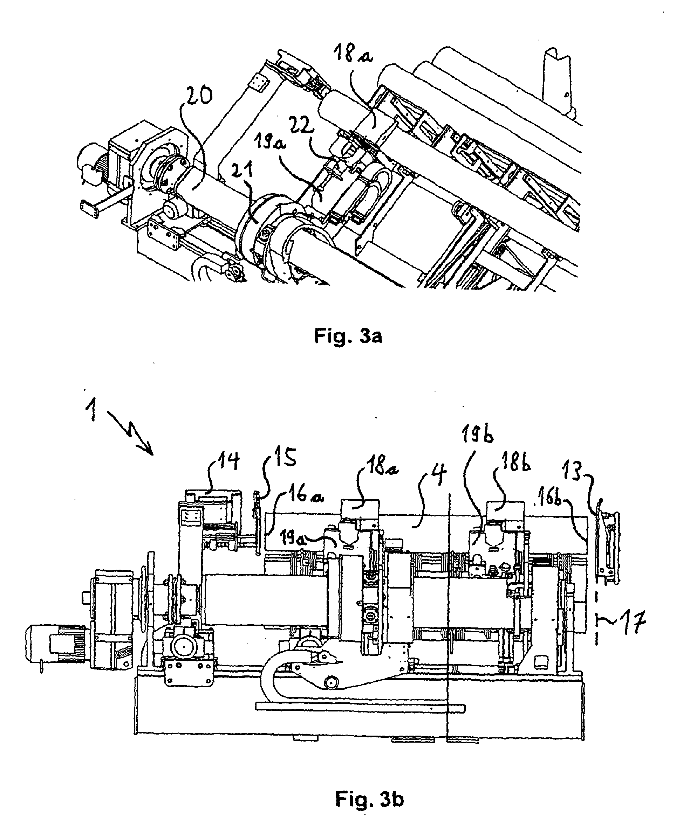

Um das Werkstück **4** in der Übernahmeposition auch in Werkstücklängsrichtung definiert anzuordnen, sind, wie in **Fig. 3b** gezeigt, an der Beschickungseinrichtung 1 ein eine Nulllage des Werkstücks 4 definierender Referenzanschlag **13** sowie eine Vorschubeinrichtung **14** mit einem federvorgespannten Anschlag **15** vorgesehen. Zunächst wird der federvorgespannte Anschlag 15 mit relativ hoher Geschwindigkeit gegen ein erstes Werkstückende **16a** gefahren. Die Vorschubeinrichtung 14 ist mit einer (nicht gezeigten) Sensorik ausgestattet, um den Impuls beim Auftreffen des federvorgespannten Anschlags 15 auf das erste Werkstückende 16a zu detektieren. Nach dem Auftreffen des federvorgespannten Anschlags 15 wird das Werkstück 4 mit reduzierter Geschwindigkeit gegen den Referenzanschlag 13 gefahren, der gelenkig gelagert ist. Die Bewegung der Vorschubeinrichtung 14 in Werkstücklängsrichtung wird abschaltet, sobald eine vorgegebene Anpresskraft erreicht ist, mit welcher das Werkstück 4 an dem Referenzanschlag 13 anliegt. Die Vorschubeinrichtung 14 und der Referenzanschlag 13 bilden gemeinsam eine Einrichtung zur Längspositionierung, mittels derer das Werkstück 4 in einer am Referenzanschlag 13 definierten Position 17 in Werkstücklängsrichtung angeordnet werden kann. Bei am Referenzanschlag 13 anliegendem Werkstück 4 kann die Länge des Werkstücks gemessen werden.

Durch die Positionierung in der Position 12 gemäß Fig. 2a sowie in der Position 17 gemäß Fig. 3b ist das Werkstück 4 in Werkstückquerrichtung längs der Werkstückauflage 7 sowie in Werkstücklängsrichtung lagedefiniert und kann in der Nähe des ersten und eines zweiten Werkstückendes 16a, **16b** von zwei in Fig. 3b gezeigten Einspanneinrichtungen **18a, 18b** in Form von Greifern aufgenommen werden. Eine erste Einspanneinrichtung 18a ist in **Fig. 3a** in perspektivischer Darstellung gezeigt. Die erste Einspanneinrichtung 18a ist an einem schwenkbaren Arm **19a** vorgesehen, welcher an einer an einem torsionsfreien Rohr **20** angebrachten Verschiebeeinheit **21** befestigt ist. Die Verschiebeeinheit 21 erlaubt eine Positionierung der Einspanneinrichtung 18a in Werkstücklängsrichtung entlang des torsionsfreien Rohrs 20, sodass die Einspanneinrichtung 18a auch bei unterschiedlicher Werkstücklänge stets in der Nähe des zugeordneten Werkstückendes 16a positioniert werden kann. Die zweite Einspanneinrichtung 18b ist an einem zweiten schwenkbaren Arm 19b befestigt, der in Werkstücklängsrichtung nicht verschiebbar ist. Sie kann aufgrund ihrer Positionierung am Referenzanschlag 13 das Werkstück 4 stets in der Nähe des zugehörigen Werkstückendes 16b aufnehmen. Durch die Positionierung der Einspanneinrichtungen 18a, 18b in der Nähe der Werkstückenden 16a, 16b kann dort eine Fehlpositionierung des zu bearbeitenden Werkstücks 4 verhindert werden. Es versteht sich, dass zusätzliche verschiebbare Einspanneinrichtungen in Werkstücklängsrichtung zwischen den beiden gezeigten Einspanneinrichtungen 18a, 18b vorgesehen sein können, um bei flexiblen Werkstücken ein Durchbiegen zwischen den Werkstückenden 16a, 16b zu verhindern.

Im Folgenden wird die Prozessführung anhand der ersten Einspanneinrichtung 18a beschrieben, da die zweite Einspanneinrichtung 18b entsprechend arbeitet.

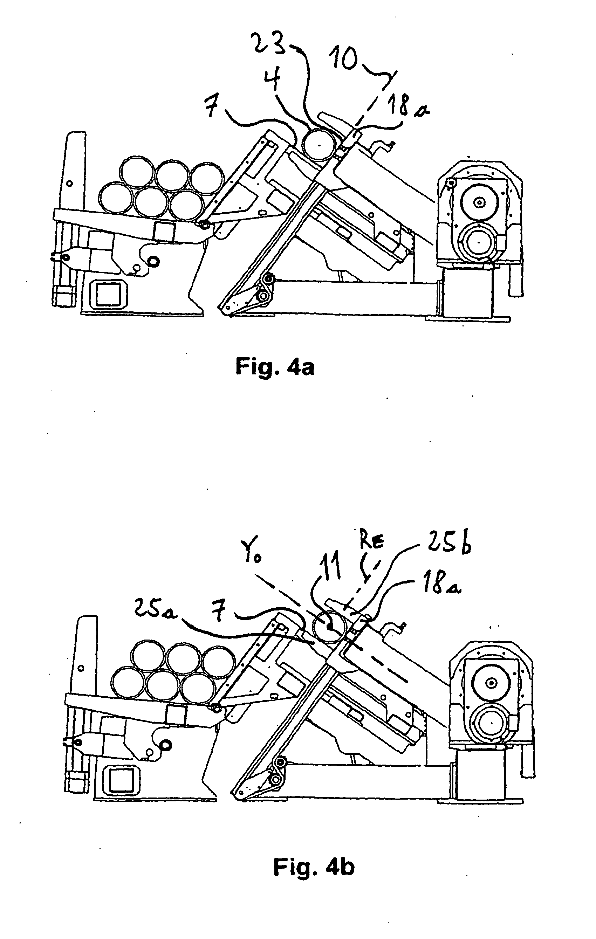

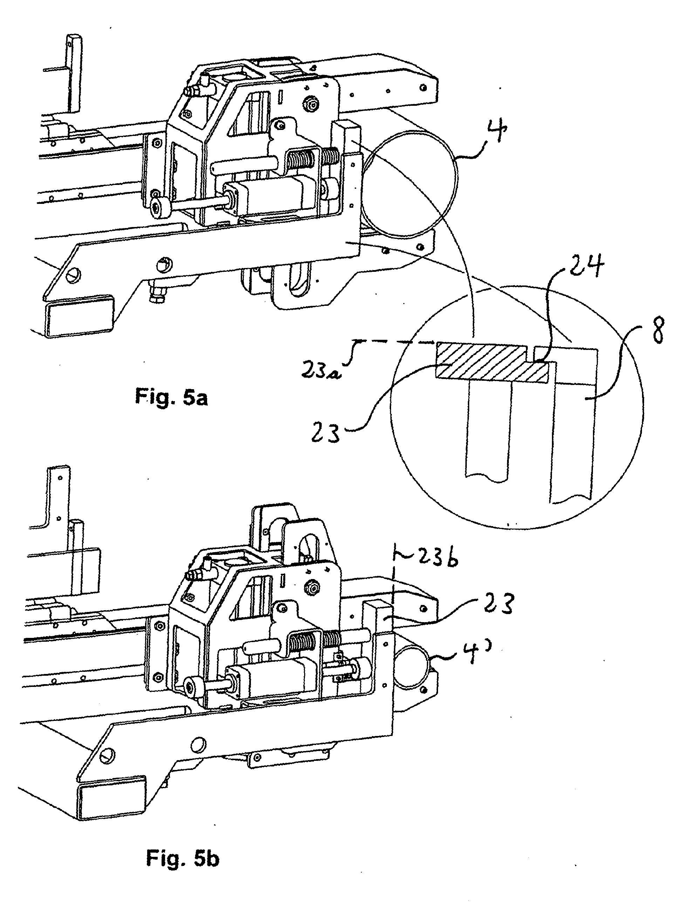

Zur Aufnahme des Werkstücks 4 wird der schwenkbare Arm 19a mittels einer in Fig. 3a gezeigten Linearverschiebeeinheit **22** durch einen Kurzhub in radialer Richtung von ca. 300 mm aus einer in Fig. 2b gezeigten zurückgezogenen radialen Ruheposition in eine radiale Arbeitsposition verbracht, bei der die Einspanneinrichtung 18a mit einem an dieser angebrachten Tiefenanschlag **23** mit der Anschlag-Position 10 des Positionieranschlags 8 fluchtend abschließt **(****Fig. 4a****).** Der Tiefenanschlag 23 dient der Abstützung des Werkstücks 4 gegen die Wirkung der Schwerkraft und wird in die Anschlag-Position 10 zugestellt. Um den Tiefenanschlag 23 an unterschiedliche Werkstück-Querschnittsmaße anpassen zu können, ist dieser in jeweils unterschiedliche Tiefenanschlag-Positionen **23a, 23b** zustellbar, wie in Fig. **5a** für das Werkstück 4 mit einem Durchmesser von 250 mm und in **Fig. 5b** für ein weiteres Werkstück **4'** mit einem Durchmesser von 50 mm gezeigt ist. Der Tiefenanschlag 23 wird in beiden Fällen linear verfahren, bis er an einer Anlagefläche **24** des Positionieranschlags 8 anliegt. Hierdurch wird gewährleistet, dass der Tiefenanschlag 23 unabhängig vom Durchmesser bzw. der entsprechenden Abmessung der zu fixierenden Werkstücke eingestellt werden kann, ohne dass hierzu der Tiefenanschlag 23 gegen das Werkstück gepresst werden muss. Bei der Beschickung einer Werkzeugmaschine mit einer Abfolge von Werkstücken mit identischem Querschnitt kann der Tiefenanschlag 23 in der zugestellten Position verbleiben, wodurch sich die Zeit für die Aufnahme der Werkstücke minimiert.

Nachdem der Tiefenanschlag 23 an dem Werkstück 4 zur Anlage gebracht ist, wird, wie in **Fig. 4b** gezeigt, das Werkstück 4 mittels der Einspanneinrichtungen 18a in einer senkrecht zur Werkstückauflage 7 verlaufenden Einspannrichtung **R_{E}** in Werkstückquerrichtung eingespannt. Beim Einspannen wird das Werkstück 4 mittels der Einspanneinrichtung 18a ein kleines Stück von der Werkstückauflage 7 abgehoben, sodass das Querschnittszentrum 11 des Werkstücks 4 mit einer zweiten Koordinate Y₀ eines Transport-Startzentrums übereinstimmt. Für dieses zentrische Einspannen ist die Einspanneinrichtung 24 mit Parallelbacken **25a, 25b** mit pneumatischer Backenbewegung ausgelegt, deren Schließposition über Reed-Kontakte abgefragt werden kann. Bei dünnwandigen Werkstücken kann außerdem der Spanndruck der Parallelbacken 25a, 25b reduziert werden. Die Parallelbacken 25a, 25b sind schwimmend gelagert.

Nachdem das Werkstück 4 zwischen den Parallelbacken 25a, 25b fixiert ist, kann das Querschnittsmaß des Werkstücks 4 in Einspannrichtung R_{E} bestimmt werden, indem der Abstand zwischen den Parallelbacken 25a, 25b gemessen wird. Stimmt das Querschnittsmaß nicht mit einem der Beschickungseinrichtung 1 z.B. durch einen Bediener vorgegebenen Querschnittsmaß in Einspannrichtung R_{E} überein, weil in der Bündelablage 3 ein Bündel mit hiervon abweichendem Querschnittsmaß abgelegt wurde, kann die Beschickungseinrichtung 1 dies detektieren und das Werkstück 4 wieder freigeben, um dessen Querschnittszentrum 11 entlang der Werkstückauflage 7 korrekt zu positionieren. Bei dem hier gezeigten Werkstück 4 mit Rundprofil ist nach der Messung des Querschnittsmaßes in Einspannrichtung R_{E} auch das Querschnittsmaß in der dazu senkrechten Richtung bekannt, sodass der Positionieranschlag 8 nach dem Freigeben des Werkstücks 4 in die korrekte Anschlag-Position zugestellt werden kann.

Nachdem das Werkstück 4 mittels der Einspanneinrichtungen 18a, 18b zentriert wurde, befindet sich das Querschnittszentrum 11 in einem in **Fig. 6** gezeigten Transport-Startzentrum X₀, Y₀, dessen erste Koordinate X₀ in Richtung der Werkstückauflage 7 und dessen zweite Koordinate Y₀ in der senkrecht dazu verlaufenden Einspannrichtung R_{E} definiert ist. Das derart positionierte Werkstück 4 wird entlang eines Kreisbogens **26** transportiert, indem die schwenkbaren Arme 19a, 19b mittels eines Drehantriebs **27** synchron verschwenkt werden, bis das Werkstück 4 eine Übergabeposition **28** nahe einer Dreh-Vorschubstation **29,** die Bestandteil einer Bearbeitungseinheit einer Werkzeugmaschine **30** ist, erreicht hat. Für die Übergabeposition 28 ist ein Übergabezentrum X₁, Y₁ definiert, mit dem das Querschnittszentrum 11 des Werkstücks 4 nach dem Transport zusammenfällt. Durch die Anordnung des Querschnittszentrums 11 in dieser definierten Lage kann die Dreh-Vorschubstation 29 der Bearbeitungseinheit das Werkstück 4 mittels eines nicht gezeigten Spannfutters aufnehmen. Das geöffnete Spannfutter der Dreh-Vorschubstation 23 wird zu diesem Zweck so weit in Längsrichtung des Werkstücks 4 verfahren, bis es das betreffende Längsende des Werkstücks 4 aufnimmt. Anschließend wird das Spannfutter unter Klemmen des Werkstücks 4 geschlossen. Außerdem wird das Werkstück 4 durch nach oben bewegte, nicht im Einzelnen gezeigte Werkstückauflagen unterfangen.

Nachdem die Dreh-Vorschubstation 29 mit ihrem Spannfutter das Werkstück 4 aufgenommen hat und das Werkstück 4 von dem Werkstückauflagen unterfangen ist, wird die Einspanneinrichtung 18a geöffnet und das Werkstück 4 wird in der Übergabeposition 28 freigegeben. Hierbei wird gleichzeitig die Einspanneinrichtung 18a entlang des schwenkbaren Arms 19a in radialer Richtung um ca. 200 mm zurückgezogen, um möglichst rasch den Bereich der Dreh-Vorschubstation 29 verlassen zu können, sodass diese nach der Übergabe das Werkstück 4 unverzüglich einer Bearbeitungseinrichtung zuführen kann. Nachfolgend wird die zurückgezogene Einspanneinrichtung 18a mittels des schwenkbaren Arms 19a entlang eines inneren Kreisbogens **31** zurück in die beispielsweise in Fig. 2b gezeigte radiale Ruheposition transportiert. Es versteht sich, dass die Rückstellbewegung aus der Übergabeposition 28 auch mit überlagerten Bewegungen erfolgen kann, indem die Einspanneinrichtung 18a gleichzeitig mittels der Linearverschiebeeinheit 22 in radialer Richtung und durch Verschwenken des schwenkbaren Arms 19a bewegt wird. In dem letztgenannten Fall wird von der Einspanneinrichtung 18a eine zwischen dem äußeren Kreisbogen 26 und dem inneren Kreisbogen 31 verlaufende Bewegungsbahn beschrieben.

Aus der radialen Ruheposition, wie sie in Fig. 1 und Fig. 2 gezeigt ist, kann die Einspanneinrichtung 18a in die radiale Arbeitsposition gemäß Fig. 3 bewegt werden, um ein zwischenzeitlich dort positioniertes weiteres Werkstück in dessen Übernahmeposition 12 aufzunehmen. Eine kontinuierliche Beschickung der Bearbeitungseinrichtung 29 der Werkzeugmaschine 30 ist dadurch gewährleistet.

## Patentansprüche

1. Beschickungseinrichtung (1) zum Beschicken einer Bearbeitungseinrichtung (29) einer Werkzeugmaschine (30) mit zu bearbeitenden stangen- oder stabartigen Werkstücken (4,4'), beispielsweise mit Rohren, umfassend eine Positioniereinrichtung (7, 8) sowie eine Transporteinrichtung (18a, 18b, 19a, 19b, 20, 27).
• wobei die Positioniereinrichtung (7, 8) eine gegen die Horizontale geneigte Werkstückauflage (7) sowie einen Positionieranschlag (8) ausweist, mittels dessen ein zu bearbeitendes, auf der Werkstückauflage (7) aufliegendes Werkstück (4, 4') in einer Übernahmeposition (12) gegen die Wirkung der Schwerkraft in Werkstückquerrichtung abstützbar ist, und
• wobei das in der Übernahmeposition (12) angeordnete Werkstück (4,4') von der Transporteinrichtung (18a, 18b, 18a, 19b, 20, 27) aufnehmbar und aus der Übernahmeposition (12) in Richtung auf die Bearbeitungseinrichtung (29) transportierbar ist,
wobei der Positionieranschlag (8) der Positioniereinrichtung (7, 8) entlang der geneigten Werkstückauflage (7) bewegbar und in unterschiedliche Anschlag-Positionen (9, 10) zustellbar ist,
**dadurch gekennzeichnet, dass**
der Positionieranschlag (8) in eine zu einer Zufuhrseite der Positioniereinrichtung (7, 8) hin gelegene zufuhrseitige Anschlag-Position-(9) zustellbar ist, in welcher ein zu bearbeitendes Werkstück (4, 4') an dem Positionieranschlag (8) in Werkstückquerrichtung abstützbar ist, und dass der Positionieranschlag (8) gemeinschaftlich mit dem daran abgestützten Werkstück (4,4') unter Bewegen entlang der geneigten Werkstückauflage (7) aus der zufuhrseitigen Anschlag-Position (9) in eine zu der Abfuhrseite der Positioniereinrichtung (7, 8) hin gelegene abfuhrseitige Anschlag-Position (10) zustellbar ist, wobei die abfuhrseitige Anschlag-Position (10) des Positionieranschlags (8) der Übernahmeposition (12) des zu bearbeitenden Werkstücks (4 4') zugeordnet ist, dass die Transporteinrichtung (18a, 18b, 19a, 19b, 20, 27) mindestens eine Einspanneinrichtung (18a, 18b) aufweist, mittels derer ein zu bearbeitendes Werkstück (4, 4') in Werkstückquerrichtung in einer senkrecht zu der geneigten Werkstückauflage (7) verlaufenden Einspannrichtung (R_{E}) einspannbar ist, dass an der in einer Aufnahmeposition befindlichen Einspanneinrichtung (18a, 18b) eine zweite Koordinate (Y₀) eines Transport-Startzentrums (X₀, Y₀) in Einspannrichtung (R_{E}) definiert ist, und dass das in der Übernahmeposition (12) befindliche Werkstück (4, 4') mittels der in der Aufnahmeposition befindlichen Einspanneinrichtung (18a, 18b) unter Einspannen des Werkstücks (4, 4') in der Einspannrichtung (R_{E}) derart einspannbar ist, dass das Querschnittszentrum (11) des an der Einspanneinrichtung (18a, 18b) eingespannten Werkstücks (4, 4') in der zweiten Koordinate (Y₀) mit dem Transport-Startzentrum (X₀, Y₀) übereinstimmt.

2. Beschickungseinrichtung nach Anspruch 1, **dadurch gekennzeichnet, dass** an der Positioniereinrichtung (7, 8) wenigstens eine erste Koordinate (X₀) des Transport-Startzentrums (X₀, Y₀) in Richtung der Werkstückauflage (7) definiert ist, welche bei in der Übernahmeposition (12) angeordnetem Werkstück (4, 4') mit einer Koordinate eines Querschnittszentrums (11) des betreffenden, zu bearbeitenden Werkstücks (4, 4') übereinstimmt, und dass der Positionieranschlag (8) der Positioniereinrichtung (7, 8) in Abhängigkeit von dem Querschnitt des zu bearbeitenden Werkstücks (4, 4') unter Bewegen entlang der geneigten Werkstückauflage (7) in unterschiedliche Anschlag-Positionen (9, 10) zustellbar ist, wobei bei jeder dieser Anschlag-Positionen (9, 10) des Positionieranschlags (8) das Querschnittszentrum (11) des von dem Positionieranschlag (8) in Werkstückquerrichtung abgestützten Werkstücks (4, 4') wenigstens in der ersten Koordinate (X₀) mit dem Transport-Startzentrum (X₀, Y₀) übereinstimmt.

3. Beschickungseinrichtung nach einem der vorhergehenden Ansprüche, **dadurch gekennzeichnet, dass** die Positioniereinrichtung (7, 8) eine Einrichtung (13, 14, 15) zur Positionierung eines zu bearbeitenden Werkstücks (4, 4') in Werkstücklängsrichtung umfasst.

4. Beschickungseinrichtung nach Anspruch 3, **dadurch gekennzeichnet, dass** die Einrichtung (13, 14, 15) zur Langspositionierung des zu bearbeitenden Werkstücks (4, 4') einen in Werkstücktängsrichlung definiert angeordneten Referenzanschlag (13) sowie eine Vorschubeinrichtung (14) aufweist, mittels derer das zu bearbeitende Werkstück (4, 4') zur Überführung in die Übernahmeposition (12) an dem Referenzanschlag (13) anlegbar ist.

5. Beschickungseinrichtung nach einem der vorhergehenden Ansprüche, **dadurch gekennzeichnet, dass** die Einspanneinrichtung (18a, 18b) einen senkrecht zur Einspannrichtung (R_{E}) bewegbaren und in unterschiedliche Tiefenanschlag-Positionen (23a, 23b) zustellbaren Tiefenanschlag (23) zur Abstützung des Werkstücks (4, 4') aufweist.

6. Beschickungseinrichtung nach Anspruch 5, **dadurch gekennzeichnet, dass** an dem Positionieranschlag (8) eine Anlagefläche (24) zur Anlage des Tiefenanschlags (29) vorgesehen ist, mittels derer der Tiefenanschlag (23) in eine Tiefenanschlag-Position (23a, 23b) zustellbar ist, in welcher er werkstückseitig mit dem ein zu bearbeitendes Werkstück (4, 4') in der Übernahmeposition abstützenden Positionieranschlag (8) fluchtet.

7. Beschickungseinrichtung nach einem der vorhergehenden Ansprüche, **dadurch gekennzeichnet dass** zum Transport des zu bearbeitenden Werkstücks (4, 4') aus der Übernahmeposition (12) in eine zu der Bearbeitungseinrichtung (29) hin gelegene Übergabeposition (28) entlang eines Kreisbogens (26) die Einspanneinrichtung (18a, 18b) an einem schwenkbaren Arm (19a,19b) angebracht ist.

8. Beschickungseinrichtung nach Anspruch 7, **dadurch gekennzeichnet, dass** der schwenkbare Arm (19a, 19b) eine Linearverschiebeeinheit (22) aufweist, mittels derer die Einspanneinrichtung (18a, 18b) in radialer Richtung verschiebbar ist

9. Beschickungseinrichtung nach einem der vorhergehenden Anspruche, **dadurch gekennzeichnet, dass** mindestens zwei Einspanneinrichtungen (18a, 18b) vorgesehen sind, die in Werkstückläbgsrichtung relativ zueinander bewegbar und in unterschiedlichen Relativlagen zustellbar sind.

10. Verfahren zum Beschicken einer Bearbeitungseinrichtung (29) einer Werkzeugmaschine (30) mit zu bearbeitenden stangen- oder stabförmigen Werkstücken (4, 4'), beispielsweise mit Rohren, mittels einer Beschickungseinrichtung (1), umfassend die Schritte:
• Positionieren eines zu bearbeitenden Werkstücks (4, 4') mittels einer Positioniereinrichtung (7, 8) in einer Übermahmeposition (12), wobei die-Positioniereinrichtung (7, 8) eine gegen die Horizontale geneigte Werkstückauflage (7) sowie einen Positionieranschlag (8) aufweist, und wobei mittels des Positionieranschlags (8) ein zu bearbeitendes, auf der Werkstückauflage (7) aufliegendes Werkstück (4, 4') in der Übernahmeposition (12) gegen die Wirkung der Schwerkraft in Werkstückquerrichtung abgestützt wird, und
• Aufnehmen des in der Übermahmeposition (12) angeordneten Werkstücks (4, 4') und Transportieren des Werkstücks (4, 4') von dei Übernahmeposition (12) in Richtung auf die Bearbeitungseinrichtung (29),
• wobei der Positionieranschlag (8) zum Positionieren das Werkstücks (4,4') entlang der geneigten Werkstückauflage (7) bewegt und in je nach Werkstück (4, 4') unterschiedliche Anschlag-Positionen (9, 10) zugestellt wind,
**dadurch gekennzeichnet dass**
der Positionieranschlag (8) in eine zu einer Zufuhrseite der Positioniereinrichtung (7, 8) hin gelegene zufuhrseitige Anschlag-Position (9) zugestellt wird, in welcher das zu bearbeitende Werkstück (4, 4') an dem Positionieranschlag (8) in Werkstückquerrichtung abgestützt wird, dass der Positionieranschlag (8) gemeinschaftlich mit dem daran abgestützten Werkstück (4, 4') entlang der geneigten Werkstückauflage (7) aus der zufuhrseitigen Anschag-Position (9) in eine zu der Abfuhrseite der Positionlereinrichtung (7, 8) hin gelegene abfuhrseitige Anschlag-Position (10) bewegt und dort zugestellt wird, wobei die abfuhrseitige Anschlag-Position (10) des Positionieranschlags (8) der Übernahmeposition (12) des zu bearbeitenden Werkstücks (4, 4') zugeordnet ist,
dass das zu bearbeitende Werkstück (4, 4') mittels mindestens einer Einspanneinrichtung (18a, 18b) eingespannt wird, indem das zu bearbeitende Werkstück (4, 4') in Werkstückquerrichtung in einer senkrecht zu der geneigten Werkstückauflage (7) verlaufenden Einspannrichtung (R_{E}) eingespannt wird, wobei an der in einer Aufnahmeposition befindlichen Einspanneinrichtung (18a,18b) eine zweite Koordinate (Y₀) eines Transport-Startzentrums (X₀, Y₀) in Einspannrichtung (R_{E}) definiert wird, und dass das in der Übernahmeposition (12) befindliche Werkstück (4, 4') mittels der in der Aufnahmeposition befindlichen Einspanneinrichtung (18a, 18b) unter Einspannen des Werkstücks (4, 4') in der Einspannrichtung (R_{E}) derart eingespannt wird, dass das Querschnittszentrum (11) des an der Einspanneinhchtung (18a, 18b) eingespannten Werkstücks (4, 4') in der zweiten Koordinate (Y₀) mit dem Transport-Startzentrum (X₀, Y₀) übereinstimmt.

11. Verfahren nach Anspruch 10, **dadurch gekennzeichnet, dass** an der Positioniereinrichtung (7. 8) eine erste Koordinate (X₀) des Transport-Startzentrums (X₀, Y₀) in Richtung der Werkstückauftage (7) definiert wird, welche bei in der Übernahmeposition (12) angeordnetem Werkstück (4, 4') mit einer Kooridnate eines Querschnittszentrums (11) des betreffenden, zu bearbeitenden Werkstücks (4, 4') übereinstimmt, und dass der Positionieranschlag (8) der Positioniereinchtung (7, 8) in Abhängigkeit von dem Querschnitt des zu bearbeitenden Wertstücks (4, 4') unter Bewegen entlang der geneigten Werkstückauflage (7) in unterschiedliche Anschlag-Positionen (9, 10) zugestellt wird, wobei bei jeder dieser Anschlag-Positionen (9, 10) des Positionieranschlags (8) das Querschnittszentrum (11) des von dem Positionieranschlag (8) in Werkstückquerrichtung abgestützen Werkstücks (4, 4') wenigstens in der ersten Koordinate (X₀) mit dem Transport-Startzentrum (X₀ Y₀) übereinstimmt.

12. Verfahren nach Anspruch 10 oder 11, **dadurch gekennzeichnet, dass** beim Einspannen des Werkstücks (4, 4') ein Querschnittsmaß (d) des Werkstücks (4, 4') in Einspannrichtung (R_{E}) gemessen wird, und dass das gemessene Querschnittsmaß (d) mit einem vorgegebenen Querschnittsmaß verglichen wird.

13. Verfahren nach einem der Ansprüche 10 bis 12, **dadurch gekennzeichnet, dass** das in der Einspanneinrichtung (18a, 18b) eingespannte Werkstück (4, 4') mittels eines schwenkbaren Arms (19a, 19b) entlang eines Kreisbogens (26) von der Übernahmeposition (12) in eine zu der Bearbeitungseinrichtung (29) der Werkzeugmaschine (30) hin gelegene Übergabeposition (28) transportiert wird.

14. Verfahren nach Anspruch 13, **dadurch gekennzeichnet, dass** die Einspanneinrichtung (18a, 18b) das eingespannte Werkstück (4, 4') in der Übergabeposition (28) freigibt, und dass nach dem Freigeben des Werkstücks (4, 4') die Einspanneinrichtung (18a, 18b) durch Linearverschieben des schwenkbaren Arms (19a, 19b) in radialer Richtung von dem in der Übergabeposition (28) befindlichen Werkstück (4, 4') zurückgezogen wird.

## Claims

1. A loading device (1) for loading a processing device (29) of a machine tool (30) with rod- or bar-type workpieces (4, 4') that are to be processed, for example pipes, comprising a positioning device (7, 8) and a transport device (18a, 18b, 19a, 19b, 20, 27),
• wherein the positioning device (7, 8) has a workpiece support (7) which is inclined to the horizontal and also has a positioning stop (8) by means of which a workpiece (4, 4') that is to be processed and that is lying on the workpiece support (7) can be supported in an acceptance position (12) in the transverse direction of the workpiece against the action of gravity, and
• wherein the workpiece (4, 4') situated in the acceptance position (12) can be received by the transport device (18a, 18b, 19a, 19b, 20, 27) and transported from the acceptance position (12) in the direction towards the processing device (29),
wherein the positioning stop (8) of the positioning device (7, 8) is movable along the inclined workpiece support (7) and is positionable in different stop positions (9, 10),
**characterised in that**
the positioning stop (8) is positionable in a charging-side stop position (9) situated towards a charging side of the positioning device (7, 8), in which stop position (9) a workpiece (4, 4') to be processed can be supported on the positioning stop (8) in the transverse direction of the workpiece, and the positioning stop (8) is positionable together with the workpiece (4, 4') supported thereon, with movement along the inclined workpiece support (7), from the charging-side stop position (9) to a discharging-side stop position (10) situated towards the discharging side of the positioning device (7, 8), the discharging-side stop position (10) of the positioning stop (8) being associated with the acceptance position (12) of the workpiece (4, 4') to be processed, the transport device (18a, 18b, 19a, 19b, 20, 27) has at least one clamping device (18a, 18b) by means of which a workpiece (4, 4') to be processed can be clamped in the transverse direction of the workpiece in a clamping direction (R_{E}) extending perpendicular to the inclined workpiece support (7), a second coordinate (Y₀) of a transport start centre (X₀, Y₀) is defined in the clamping direction (R_{E}) at the clamping device (18a, 18b) situated in a receiving position, and the workpiece (4, 4') situated in the acceptance position (12) can be clamped by means of the clamping device (18a, 18b) situated in the receiving position, with the workpiece (4, 4') being clamped in the clamping direction (R_{E}), in such a manner that the cross-section centre (11) of the workpiece (4, 4') clamped at the clamping device (18a, 18b) corresponds in the second coordinate (Y₀) to the transport start centre (X₀, Y₀).

2. A loading device according to claim 1, **characterised in that** at least a first coordinate (X₀) of the transport start centre (X₀, Y₀) is defined in the direction of the workpiece support (7) at the positioning device (7, 8), which first coordinate (X₀) corresponds, when the workpiece (4, 4') is in the acceptance position (12), to a coordinate of a cross-section centre (11) of the relevant workpiece (4, 4') to be processed, and the positioning stop (8) of the positioning device (7, 8) is positionable, with movement along the inclined workpiece support (7), in different stop positions (9, 10) in dependence on the cross-section of the workpiece (4, 4') to be processed, wherein in each of those stop positions (9, 10) of the positioning stop (8) the cross-section centre (11) of the workpiece (4, 4') supported by the positioning stop (8) in the transverse direction of the workpiece corresponds at least in the first coordinate (X₀) to the transport start centre (X₀, Y₀).

3. A loading device according to either of the preceding claims, **characterised in that** the positioning device (7, 8) includes a device (13, 14, 15) for positioning a workpiece (4, 4') to be processed in the longitudinal direction of the workpiece.

4. A loading device according to claim 3, **characterised in that** the device (13, 14, 15) for longitudinal positioning of the workpiece (4, 4') to be processed has a reference stop (13) disposed at a defined location in the longitudinal direction of the workpiece and has an advancing device (14) by means of which the workpiece (4, 4') to be processed can be applied to the reference stop (13) in order to bring it into the acceptance position (12).

5. A loading device according to any one of the preceding claims, **characterised in that** the clamping device (18a, 18b) has a depth stop (23) for supporting the workpiece (4, 4'), which depth stop (23) is movable perpendicular to the clamping direction (R_{E}) and is positionable in different depth stop positions (23a, 23b).

6. A loading device according to claim 5, **characterised in that** a contacting surface (24) for contacting the depth stop (23) is provided on the positioning stop (8), by means of which contacting surface (24) the depth stop (23) is positionable in a depth stop position (23a, 23b) in which it is aligned, on the side towards the workpiece, with the positioning stop (8) supporting a workpiece (4, 4') to be processed in the acceptance position.

7. A loading device according to any one of the preceding claims, **characterised in that**, for transporting the workpiece (4, 4') to be processed along a circular arc (26) from the acceptance position (12) to a delivery position (28) situated towards the processing device (29), the clamping device (18a, 18b) is attached to a pivoting arm (19a, 19b).

8. A loading device according to claim 7, **characterised in that** the pivoting arm (19a, 19b) has a linear displacement unit (22) by means of which the clamping device (18a, 18b) is displaceable in a radial direction.

9. A loading device according to any one of the preceding claims, **characterised in that** at least two clamping devices (18a, 18b) are provided which are movable relative to each other in the longitudinal direction of the workpiece and are positionable in different relative positions in the longitudinal direction of the workpiece.

10. A method for loading a processing device (29) of a machine tool (30) with rod- or bar-type workpieces (4, 4') that are to be processed, for example pipes, by means of a loading device (1), comprising the steps of:
• positioning a workpiece (4, 4') that is to be processed in an acceptance position (12) by means of a positioning device (7, 8), wherein the positioning device (7, 8) has a workpiece support (7) which is inclined to the horizontal and also has a positioning stop (8), and wherein by means of the positioning stop (8) a workpiece (4, 4') that is to be processed and that is lying on the workpiece support (7) is supported in the acceptance position (12) in the transverse direction of the workpiece against the action of gravity, and
• receiving the workpiece (4, 4') situated in the acceptance position (12) and transporting the workpiece (4, 4') from the acceptance position (12) in the direction towards the processing device (29),
• wherein for positioning the workpiece (4, 4') the positioning stop (8) is moved along the inclined workpiece support (7) and positioned in different stop positions (9, 10) depending on the workpiece (4, 4'),
**characterised in that**
the positioning stop (8) is positioned in a charging-side stop position (9) situated towards a charging side of the positioning device (7, 8), in which stop position (9) the workpiece (4, 4') to be processed is supported on the positioning stop (8) in the transverse direction of the workpiece, the positioning stop (8) is moved, together with the workpiece (4, 4') supported thereon, along the inclined workpiece support (7) from the charging-side stop position (9) to a discharging-side stop position (10) situated towards the discharging side of the positioning device (7, 8) and is positioned there, the discharging-side stop position (10) of the positioning stop (8) being associated with the acceptance position (12) of the workpiece (4, 4') to be processed,
the workpiece (4, 4') to be processed is clamped by means of at least one clamping device (18a, 18b) by clamping the workpiece (4, 4') to be processed in the transverse direction of the workpiece in a clamping direction (R_{E}) extending perpendicular to the inclined workpiece support (7),
wherein a second coordinate (Y₀) of a transport start centre (X₀, Y₀) is defined in the clamping direction (R_{E}) at the clamping device (18a, 18b) situated in a receiving position, and the workpiece (4, 4') situated in the acceptance position (12) is clamped by means of the clamping device (18a, 18b) situated in the receiving position, with the workpiece (4, 4') being clamped in the clamping direction (R_{E}), in such a manner that the cross-section centre (11) of the workpiece (4, 4') clamped at the clamping device (18a, 18b) corresponds in the second coordinate (Y₀) to the transport start centre (X₀, Y₀).

11. A method according to claim 10, **characterised in that** a first coordinate (X₀) of the transport start centre (X₀, Y₀) is defined in the direction of the workpiece support (7) at the positioning device (7, 8), which first coordinate (X₀) corresponds, when the workpiece (4, 4') is in the acceptance position (12), to a coordinate of a cross-section centre (11) of the relevant workpiece (4, 4') to be processed, and the positioning stop (8) of the positioning device (7, 8) is positioned, with movement along the inclined workpiece support (7), in different stop positions (9, 10) in dependence on the cross-section of the workpiece (4, 4') to be processed, wherein in each of those stop positions (9, 10) of the positioning stop (8) the cross-section centre (11) of the workpiece (4, 4') supported by the positioning stop (8) in the transverse direction of the workpiece corresponds at least in the first coordinate (X₀) to the transport start centre (X₀, Y₀).

12. A method according to claim 10 or 11, **characterised in that**, on clamping of the workpiece (4, 4'), a cross-sectional dimension (d) of the workpiece (4, 4') is measured in the clamping direction (R_{E}), and the measured cross-sectional dimension (d) is compared with a predefined cross-sectional dimension.

13. A method according to any one of claims 10 to 12, **characterised in that** the workpiece (4, 4') clamped in the clamping device (18a, 18b) is transported by means of a pivoting arm (19a, 19b) along a circular arc (26) from the acceptance position (12) to a delivery position (28) situated towards the processing device (29) of the machine tool (30).

14. A method according to claim 13, **characterised in that** the clamping device (18a, 18b) releases the clamped workpiece (4, 4') in the delivery position (28), and after releasing the workpiece (4, 4') the clamping device (18a, 18b) is retracted from the workpiece (4, 4') situated in the delivery position (28) by linear displacement of the pivoting arm (19a, 19b) in a radial direction.

## Revendications

1. Système d'alimentation (1) pour alimenter un dispositif d'usinage (29) d'une machine-outil (30) en pièces (4, 4') à usiner en forme de tiges ou de barres, par exemple en tubes, comprenant un dispositif de positionnement (7, 8) ainsi qu'un dispositif de transport (18a, 18b, 19a, 19b, 20, 27),
sachant que le dispositif de positionnement (7, 8) présente un porte-pièce (7) incliné par rapport à l'horizontale ainsi qu'une butée de positionnement (8), au moyen de laquelle une pièce (4, 4') à usiner reposant sur le porte-pièce (7) peut être soutenue dans le sens transversal de la pièce dans une position de réception (12) contre l'effet de la gravité,
sachant que la pièce (4, 4') disposée dans la position de réception (12) peut être prise en charge par le dispositif de transport (18a, 18b, 19a, 19b, 20, 27) et transportée depuis la position de réception (12) en direction du dispositif d'usinage (29),
sachant que la butée de positionnement (8) du dispositif de positionnement (7, 8) peut être déplacée le long du porte-pièce incliné (7) et réglée dans différentes positions de butée (9, 10),
**caractérisé en ce que** la butée de positionnement (8) peut être réglée dans une position de butée (9) côté apport, située vers un côté d'apport du dispositif de positionnement (7, 8) et dans laquelle une pièce (4, 4') à usiner peut être soutenue contre la butée de positionnement (8) dans le sens transversal de la pièce, et **en ce que** la butée de positionnement (8) peut, conjointement avec la pièce (4, 4') soutenue contre elle, par déplacement le long du porte-pièce incliné (7), être déplacée de la position de butée (9) côté apport à une position de butée (10) côté enlèvement, située vers le côté d'enlèvement du dispositif de positionnement (7, 8), sachant que la position de butée (10) côté enlèvement de la butée de positionnement (8) est associée à la position de réception (12) de la pièce (4, 4') à usiner,
**en ce que** le dispositif de transport (18a, 18b, 19a, 19b, 20, 27) présente au moins un dispositif de serrage (18a, 18b), au moyen duquel une pièce (4, 4') à usiner peut être serrée dans le sens transversal de la pièce dans une direction de serrage (R_{E}) s'étendant perpendiculairement au porte-pièce incliné (7), **en ce qu'**une deuxième coordonnée (Y₀) d'un centre de départ de transport (X₀, Y₀) est définie dans la direction de serrage (R_{E}) sur le dispositif de serrage (18a, 18b) se trouvant dans une position de prise en charge, et **en ce que** la pièce (4, 4') se trouvant dans la position de réception (12) peut, au moyen du dispositif de serrage (18a, 18b) se trouvant dans la position de prise en charge, par serrage de la pièce (4, 4') dans la direction de serrage (R_{E}), être serrée de telle sorte que le centre de section (11) de la pièce (4, 4') serrée sur le dispositif de serrage (18a, 18b) coïncide dans la deuxième coordonnée (Y₀) avec le centre de départ de transport (X₀, Y₀).

2. Système d'alimentation selon la revendication 1, **caractérisé en ce qu'**au moins une première coordonnée (X₀) du centre de départ de transport (X₀, Y₀) est définie en direction du porte-pièce (7) sur le dispositif de positionnement (7, 8) et elle coïncide, lorsque la pièce (4, 4') est disposée dans la position de réception (12), avec une coordonnée d'un centre de section (11) de la pièce concernée (4, 4') à usiner, et **en ce que** la butée de positionnement (8) du dispositif de positionnement (7, 8) peut, en fonction de la section de la pièce (4, 4') à usiner, par déplacement le long du porte-pièce incliné (7), être réglée dans différentes positions de butée (9, 10), sachant que dans chacune de ces positions de butée (9, 10) de la butée de positionnement (8), le centre de section (11) de la pièce (4, 4') soutenue par la butée de positionnement (8) dans le sens transversal de la pièce coïncide au moins dans la première coordonnée (X₀) avec le centre de départ de transport (X₀, Y₀).

3. Système d'alimentation selon l'une des revendications précédentes, **caractérisé en ce que** le dispositif de positionnement (7, 8) comprend un dispositif (13, 14, 15) pour positionner une pièce (4, 4') à usiner dans le sens longitudinal de la pièce.

4. Système d'alimentation selon la revendication 3, **caractérisé en ce que** le dispositif (13, 14, 15) pour le positionnement longitudinal de la pièce (4, 4') à usiner présente une butée de référence (13) disposée de manière définie dans le sens longitudinal de la pièce, ainsi qu'un dispositif d'avancement (14) au moyen duquel la pièce (4, 4') à usiner peut être appliquée contre la butée de référence (13) en vue du transfert dans la position de réception (12).

5. Système d'alimentation selon l'une des revendications précédentes, **caractérisé en ce que** le dispositif de serrage (18a, 18b) présente une butée de profondeur (23) pour le soutien de la pièce (4, 4'), butée qui peut être déplacée perpendiculairement à la direction de serrage (R_{E}) et réglée dans différentes positions (23a, 23b) de butée de profondeur.

6. Système d'alimentation selon la revendication 5, **caractérisé en ce qu'**une face d'application (24) pour l'application de la butée de profondeur (23) est prévue sur la butée de positionnement (8), face au moyen de laquelle la butée de profondeur (23) peut être réglée dans une position (23a, 23b) de butée de profondeur dans laquelle elle est alignée côté pièce avec la butée de positionnement (8) soutenant une pièce (4, 4') à usiner dans la position de réception.

7. Système d'alimentation selon l'une des revendications précédentes, **caractérisé en ce que**, pour le transport de la pièce (4, 4') à usiner le long d'un arc de cercle (26) de la position de réception (12) dans une position de remise (28) située vers le dispositif d'usinage (29), le dispositif de serrage (18a, 18b) est monté sur un bras pivotant (19a, 19b).

8. Système d'alimentation selon la revendication 7, **caractérisé en ce que** le bras pivotant (19a, 19b) présente une unité (22) de translation linéaire au moyen duquel le dispositif de serrage (18a, 18b) peut être déplacé en translation en direction radiale.

9. Système d'alimentation selon l'une des revendications précédentes, **caractérisé en ce qu'**il est prévu au moins deux dispositifs de serrage (18a, 18b), qui peuvent être déplacés l'un par rapport à l'autre dans le sens longitudinal de la pièce et réglés dans différentes positions relatives.

10. Procédé pour alimenter un dispositif d'usinage (29) d'une machine-outil (30) en pièces (4, 4') à usiner en forme de tiges ou de barres, par exemple en tubes, au moyen d'un système d'alimentation (1), comprenant les étapes suivantes :
positionnement d'une pièce (4, 4') à usiner dans une position de réception (12) au moyen d'un dispositif de positionnement (7, 8), sachant que le dispositif de positionnement (7, 8) présente un porte-pièce (7) incliné par rapport à l'horizontale ainsi qu'une butée de positionnement (8), et sachant qu'au moyen de la butée de positionnement (8), une pièce (4, 4') à usiner reposant sur le porte-pièce (7) est soutenue dans le sens transversal de la pièce dans la position de réception (12) contre l'effet de la gravité, et
prise en charge de la pièce (4, 4') disposée dans la position de réception (12) et transport de la pièce (4, 4') depuis la position de réception (12) en direction du dispositif d'usinage (29),
sachant que la butée de positionnement (8) est, afin de positionner la pièce (4, 4'), déplacée le long du porte-pièce incliné (7) et réglée dans différentes positions de butée (9, 10) en fonction de la pièce (4, 4'),
**caractérisé en ce que** la butée de positionnement (8) est réglée dans une position de butée (9) côté apport, située vers un côté d'apport du dispositif de positionnement (7, 8) et dans laquelle la pièce (4, 4') à usiner est soutenue contre la butée de positionnement (8) dans le sens transversal de la pièce, **en ce que** la butée de positionnement (8) est, conjointement avec la pièce (4, 4') soutenue contre elle, déplacée le long du porte-pièce incliné (7) de la position de butée (9) côté apport à une position de butée (10) côté enlèvement, située vers le côté d'enlèvement du dispositif de positionnement (7, 8), et y est réglée, sachant que la position de butée (10) côté enlèvement de la butée de positionnement (8) est associée à la position de réception (12) de la pièce (4, 4') à usiner, **en ce que** la pièce (4, 4') à usiner est serrée au moyen d'au moins un dispositif de serrage (18a, 18b), la pièce (4, 4') à usiner étant serrée dans le sens transversal de la pièce dans une direction de serrage (R_{E}) s'étendant perpendiculairement au porte-pièce incliné (7),
sachant qu'une deuxième coordonnée (Y₀) d'un centre de départ de transport (X₀, Y₀) est définie dans la direction de serrage (R_{E}) sur le dispositif de serrage (18a, 18b) se trouvant dans une position de prise en charge, et **en ce que** la pièce (4, 4') se trouvant dans la position de réception (12) est, au moyen du dispositif de serrage (18a, 18b) se trouvant dans la position de prise en charge, par serrage de la pièce (4, 4') dans la direction de serrage (R_{E}), serrée de telle sorte que le centre de section (11) de la pièce (4, 4') serrée sur le dispositif de serrage (18a, 18b) coïncide dans la deuxième coordonnée (Y₀) avec le centre de départ de transport (X₀, Y₀).

11. Procédé selon la revendication 10, **caractérisé en ce qu'**une première coordonnée (X₀) du centre de départ de transport (X₀, Y₀) est définie en direction du porte-pièce (7) sur le dispositif de positionnement (7, 8) et elle coïncide, lorsque la pièce (4, 4') est disposée dans la position de réception (12), avec une coordonnée d'un centre de section (11) de la pièce concernée (4, 4') à usiner, et **en ce que** la butée de positionnement (8) du dispositif de positionnement (7, 8) est, en fonction de la section de la pièce (4, 4') à usiner, par déplacement le long du porte-pièce incliné (7), réglée dans différentes positions de butée (9, 10), sachant que dans chacune de ces positions de butée (9, 10) de la butée de positionnement (8), le centre de section (11) de la pièce (4, 4') soutenue par la butée de positionnement (8) dans le sens transversal de la pièce coïncide au moins dans la première coordonnée (X₀) avec le centre de départ de transport (X₀, Y₀).

12. Procédé selon la revendication 10 ou 11, **caractérisé en ce que**, lors du serrage de la pièce (4, 4'), on mesure une dimension de section (d) de la pièce (4, 4') dans la direction de serrage (R_{E}), et **en ce que** la dimension de section mesurée (d) est comparée à une dimension de section prédéfinie.

13. Procédé selon l'une des revendications 10 à 12, **caractérisé en ce que** la pièce (4, 4') serrée dans le dispositif de serrage (18a, 18b) est, au moyen d'un bras pivotant (19a, 19b), transportée le long d'un arc de cercle (26) de la position de réception (12) dans une position de remise (28) située vers le dispositif d'usinage (29) de la machine-outil (30).

14. Procédé selon la revendication 13, **caractérisé en ce que**, dans la position de remise (28), le dispositif de serrage (18a, 18b) libère la pièce serrée (4, 4'), et **en ce que**, à la suite de la libération de la pièce (4, 4'), le dispositif de serrage (18a, 18b) est, par translation linéaire du bras pivotant (19a, 19b), retiré en direction radiale de la pièce (4, 4') se trouvant dans la position de remise (28).
